# EUROPÄISCHE PATENTSCHRIFT

(11) **EP 2 845 717 B1**
(45) Veröffentlichungstag und Bekanntmachung des Hinweises auf die Patenterteilung: **07.03.2018**
(21) Anmeldenummer: 14184276.5
(22) Anmeldetag: 10.09.2014
(51) Int. Cl.: B29C 49/64

(54) **Verfahren und Vorrichtung zur Bodennachkühlung**
Method and apparatus for cooling a bottom
Procédé et dispositif pour le refroidissement d'un fond

(30) Priorität: 10.09.2013 DE 102013109907
(43) Veröffentlichungstag der Anmeldung: 11.03.2015
(73) Patentinhaber: Krones AG, 93073 Neutraubling (DE)
(72) Erfinder: Dachs, Alexander, 93073 Neutraubling (DE); Steiner, Andreas, 93073 Neutraubling (DE); Blochmann, Erik, 93073 Neutraubling (DE); Lappe, Ulrich, 93073 Neutraubling (DE)
(74) Vertreter: Bittner, Bernhard

(56) Entgegenhaltungen:
- EP-A1- 0 606 496
- EP-A1- 2 439 048
- WO-A1-2011/145913
- DE-A1- 19 909 644
- DE-A1-102008 026 043
- DE-A1-102008 032 123
- GB-A- 1 286 289
- US-A- 3 666 849
- US-A1- 2007 235 906
- US-A1- 2011 162 940

## Beschreibung

Die vorliegende Erfindung betrifft ein Verfahren zur Bodennachkühlung von ausgeblasenen Behältnissen gemäß dem Oberbegriff des Patentanspruchs 1 sowie eine Vorrichtung zur Bodennachkühlung von ausgeblasenen Behältnissen gemäß dem Oberbegriff des Patentanspruchs 10.

Das hier beschriebene Verfahren zur Bodennachkühlung von ausgeblasenen Behältnissen fußt unter anderem darauf, dass nach einer Übergabe der geblasenen Behältnisse von einer Formblasmaschine zu einem Auslaufstern, der unmittelbar entlang einer Transportrichtung der Behältnisse auf die Formblasmaschine folgt, eine Bodenkühlung der Behältnisse mittels zumindest einer Bodenkühlvorrichtung erfolgt.

Die vorliegende Erfindung beruht dabei, unter anderem, auf der Erkenntnis, dass beim Streckblasen von Kunststoffbehältern eine Verweilzeit in der Blasform zum Abkühlen des Materials an einer Formwand entscheidend sein kann, um formstabile Behälter aus der Blasform entnehmen zu können. Im Zuge immer höherer Ausstoßleistungen wird jedoch die Verweilzeit in der Blasform immer kürzer. Gerade im Bodenbereich, bei dem stets dickeres schwach- oder unverstrecktes Material angeordnet ist, kann eine äußere Randschicht oftmals nur schwer gekühlt werden. Dies liegt unter anderem daran, dass eine Temperatur von einer Innenseite im Bodenbereich nach außen wandert und eine, bereits nach dem Ausblasen sich in einem Kühlprozess befindliche und daher bereits abgekühlte (formstabile) Außenschicht, wieder und beispielsweise schleichend beginnt von innen heraus sich zu erwärmen und/oder in unerwünschter Weise sich zu verformen.
Um eine derartige Nacherwärmung und/oder Nachverformung zu verhindern, wurde die Einrichtung einer Bodennachkühlung erdacht, bei der ein Bodenbereich eines ausgeblasenen Behältnisses nach dem Verlassen der Blasmaschine nochmals gekühlt wird. Bei heutigen Stationsleistungen kann nämlich die Kühlzeit in der Blasform so gering sein, dass das unzulässige Verformen eines Bodenbereichs des ausgeblasenen Behältnisses einsetzt, bevor die Bodennachkühlung nach der Blasmaschine einsetzt. Insofern kann auch mit heutigen Bodenkühlvorrichtungen ein unerwünschtes Nachverformen nach dem Ausblasen des Bodenbereichs der ausgeblasenen Behältnisse nur schwer verhindert werden.
Insofern ist es unter anderem ein Ziel der vorliegenden Erfindung, Möglichkeiten anzugeben, die Bodenkühlung der Behältnisse einsetzen zu lassen, bevor derartige unerwünschte Nachverformungen einsetzen. Ein derartiges Problem der unerwünschten Nachverformung wurde im Stand der Technik jedoch bisher nur unzureichend gelöst. Erdacht wurden im Stand der Technik daher lediglich Methoden, welche unter anderem darauf gerichtet sind, dass mehr Temperatur bereits in der Blasformmaschine im Bereich des Blasrades über den Boden der ausgeblasenen Behältnisse abgeleitet wird oder Fertigblasluft im Blasrad ähnlich zu einem Air-Recycling von Behältnis zu Behältnis strömen zu lassen, was jedoch einen erhöhten Luftverbrauch zur Folge hat.
Insofern ist es eine Aufgabe der vorliegenden Erfindung, die oben genannten Probleme einer unerwünschten Bodennachverformung zu verhindern und somit ein Verfahren zur Bodennachkühlung von ausgeblasenen Behältnissen anzugeben, welches zum einen kostengünstig ist und dabei gleichzeitig hohe Taktraten erlaubt und gleichzeitig Bodennachverformungen von ausgeblasenen Behältnissen verhindert werden.

Diese Aufgabe wird durch die Gegenstände der Patentansprüche 1 und 7 gelöst. Vorteilhafte Ausführungsformen sind in den abhängigen Ansprüchen beschrieben.
Um nun ein Verfahren zur Bodennachkühlung von ausgeblasenen Behältnissen bereitzustellen, welches sowohl kostengünstig ist und hohe Ausstoßzeiten ermöglicht und dabei ebenso unerwünschte Bodennachverformungen nach einem Ausblasen verhindert werden, macht die vorliegende Erfindung unter anderem von der Idee Gebrauch, dass die Bodenkühlung der Behältnisse unmittelbar während eines Zeitintervalls von wenigstens 0,1 Sekunden und höchstens 2 Sekunden nach einem Druckentlasten der Behältnisse durch die Formblasmaschine einsetzt.
Insofern beginnt das Zeitintervall der Bodennachkühlung noch innerhalb der Blasformmaschine, also unmittelbar nach dem Moment des Entlastens, sodass bereits bei der Übergabe von der Formblasmaschine in den unmittelbar in der Transportrichtung auf die Formblasmaschine folgenden Auslaufstern das Zeitintervall anläuft.
Es wurde nämlich überraschenderweise die Erkenntnis gewonnen, dass die unerwünschte Bodennachverformung nach dem Ausblasen von Kunststoffvorformlingen zu ausgeblasenen Behältnissen in besonders effektiver und effizienter Weise in einem derart engen Zeitintervall beginnend nach dem Entlasten der ausgeblasenen Behältnisse unterbunden und verhindert werden kann ohne dass Ausstoßleistungen des gesamten Behälterproduktionsprozesses beginnend bei der Bereitstellung von Kunststoffvorformlingen hin zum fertig gefüllten Behältnis vermindert wäre. Maßgeblich ist dabei insbesondere der Einsatz und Beginn des Kühlvorganges des Bodenbereiches des jeweils ausgeblasenen Behältnisses. Dieses kann insbesondere heißen, dass die hier beschriebene Bodenkühlung der Behältnisse mittels der Bodenkühlvorrichtung zwar innerhalb des Zeitintervalls von wenigstens zwei Sekunden und höchstens 10 Sekunden beginnt, jedoch auch vorgebbar entsprechend der Fertigungsbedürfnisse über dieses Zeitintervall hinaus noch andauert.
Alternativ ist denkbar, dass die gesamte hier beschriebene Bodenkühlung durch die Bodenkühlvorrichtung vollständig, sowohl innerhalb des Zeitintervalls beginnt, als auch innerhalb des beanspruchten Zeitintervalls endet.
Insofern ist nunmehr ein besonders effizientes und vorteilhaftes Verfahren zur Bodennachkühlung von ausgeblasenen Behältnissen angeboten. Zudem wird zusätzlich der Bodenbereich der jeweiligen ausgeblasenen Behältnisse mittels einer in Transportrichtung der ausgeblasenen Behältnisse auf die hier beschriebene Bodenkühlvorrichtung bzw. den hier beschriebenen Auslaufstern folgenden weiteren Bodenkühlvorrichtung noch effizienter gekühlt. Gemäß zumindest einer Ausführungsform des Verfahrens zur Bodennachkühlung von ausgeblasenen Behältnissen wird nach einer Übergabe der ausgeblasenen Behältnisse von einer Formblasmaschine zu einem Auslaufstern, der unmittelbar entlang einer Transportrichtung der Behältnisse auf die Formblasmaschine folgt, eine Bodennachkühlung der Behältnisse mittels zumindest einer Bodenkühlvorrichtung durchgeführt. Dabei setzt die Bodenkühlung des Behältnisses unmittelbar während eines Zeitintervalls von wenigstens 0,1 Sekunden und höchstens 2 Sekunden nach einem Druckentlasten der Behältnisse durch die Formblasmaschine nach dem Ausblasen ein. Die Bodenkühlvorrichtung umfasst zumindest einen Außenflächenkühler, welcher ein Kühlmedium auf eine Außenfläche von Behältnisböden der ausgeblasenen Behältnisse aufbringt. Es hat sich nämlich gezeigt, dass ein derartiger Außenflächenkühler besonders einfach auf die jeweiligen Außenflächen der Behältnisböden der ausgeblasenen Behältnisse anwendbar ist ohne dass ein derartiger Außenflächenkühler in aufwendiger Weise in die Bodenkühlvorrichtung implementiert werden müsste. Dieses liegt unter anderem auch daran, dass eine Außenfläche der Behältnisböden der ausgeblasenen Behältnisse besonders einfach innerhalb des Fertigungsprozesses für die Bodenkühlvorrichtung zugänglich ist. Die Bodenkühlvorrichtung kühlt mittels Luft als Kühlmedium die Behältnisböden der Behältnisse. Insbesondere kann die Bodenkühlvorrichtung in Form einer "Vortec"-Kühlung" ausgebildet sein. Dieses heißt insbesondere, dass dadurch auch alle Merkmale in Bezug auf eine "Vortec"-Kühlung als offenbart zu gelten haben. Wasser oder Luft als Kühlmedium bietet nämlich den Vorteil, dass das Kühlmedium sowohl kostengünstig ist als auch in faktisch unbegrenzter Form beschaffbar ist.
Gemäß zumindest einer Ausführungsform umfasst der Außenflächenkühler zumindest ein Sprühnebelelement, welches das Kühlmedium auf die Außenfläche der Behältnisböden aufsprüht. Das Sprühnebelelement kann dazu zumindest eine Sprühnebeldüse umfassen, welche das Kühlmedium, welches beispielsweise Wasser oder eine sonstige Flüssigkeit ist, vorzugsweise flächig auf eine Außenfläche des Behältnisses und insbesondere auf eine Außenfläche des Behältnisses im Bodenbereich der Behältnisse aufsprüht. Eine derartige Sprühnebeldüse bietet nämlich den Vorteil, dass mittels sehr geringem Bedarf an einem Kühlmedium über die Sprühnebeldüse dieses in feinste Tröpfchen zersprüht wird und diese Tröpfchen daher nebelartig auf die Außenfläche des jeweiligen ausgeblasenen Behältnisses treffen. Derartige Sprühnebeldüsen sind daher zum einen für eine besonders effiziente und kostengünstige Kühlung geeignet und zum anderen aufgrund ihrer geringen Abmaße besonders einfach im Bereich und/oder an dem Auslaufstern montierbar.

Gemäß zumindest einer Ausführungsform umfasst der Außenflächenkühler zumindest ein Sprinklerelement, welches das Kühlmedium auf die Außenfläche der Behältnisböden aufsprenkelt. Ein derartiges Sprinklerelement ist dadurch gekennzeichnet, dass durch das Sprinklerelement erzeugte Tröpfchen regenartig auf die Außenfläche des ausgeblasenen Behältnisses treffen, wodurch ermöglicht ist, dass eine größere Menge des Kühlmediums innerhalb eines kürzeren Zeitabschnitts, als dies beispielsweise bei Nebeldüsen der Fall ist, auf die Außenfläche des ausgeblasenen Behältnisses treffen können und daher die Außenfläche je nach Anordnung des Sprinklerelements stärker kühlen können.

Gemäß zumindest einer Ausführungsform umfasst der Außenflächenkühler zumindest ein Schwammelement, welches zumindest teilweise mit dem Kühlmedium getränkt ist und dessen Schwammaußenfläche mit der Außenfläche des Behältnisbodens in Kontakt bringbar ist. Insbesondere kann ein derartiges Schwammelement das Kühlmedium dauerhaft aufsaugen, sodass nicht ständig gezwungener Maßen ein Kühlmedium zur Aufbringung auf die Außenfläche des ausgeblasenen Behältnisses nachgeschoben werden müsste. Insbesondere ist denkbar, dass das Schwammelement mit Fluidleitungen, welche das Kühlmedium von einem Reservoir hin zum Schwammelement leiten, dauerhaft verbunden ist, sodass stets je nach Tränkungsgrad des Schwammelements und dessen Saugeigenschaften automatisch das Kühlmedium von dem Schwammelement aufgesogen wird.

Gemäß zumindest einer Ausführungsform ist das Schwammelement in Form einer Schwammrolle ausgebildet. Denkbar ist in diesem Zusammenhang, dass ein derartiges Schwammelement beispielsweise feststehend an oder im Bereich des Auslaufsterns montiert ist und während des Vorbeiführens des ausgeblasenen Behältnisses dieses das in Form einer Schwammrolle ausgebildete Schwammelement passiert und daher an diesem vorbeigeführt wird. Während des Vorbeiführens wird vorzugsweise das Schwammelement in unmittelbarem Kontakt mit einer Außenfläche des ausgeblasenen Behältnisses und insbesondere im Bodenbereich des jeweiligen Behältnisses gebracht, sodass das von dem Schwammelement aufgesogene Kühlmedium in unmittelbarem Kontakt mit der Außenfläche des Behältnisses kommt, und die Außenfläche während des Entlangführens der Behältnisse in der Transportrichtung über den unmittelbaren Kontakt mit dem Schwammelement effektiv gekühlt werden kann. Die Bodenkühlvorrichtung umfasst zumindest eine Gebläsekühlung, wobei mittels der Gebläsekühlung Luft, insbesondere Umgebungsluft, auf Behältnisböden der Behältnisse geführt wird. Bei der Gebläsekühlung wird daher auf ein flüssiges Kühlmedium verzichtet sein und stattdessen das Kühlmedium in Form von Luft angeboten werden. Insofern kann auf aufwendige Fluidleitungen zur Zuführung des Kühlmediums auf die Außenfläche der ausgeblasenen Behältnisse verzichtet werden und die Umgebungsluft besonders einfach und kostengünstig mittels eines Vordrucks der einen Kühlstrom erzeugt auf beispielsweise die Außenfläche im Bereich der Behältnisböden der Behältnisse hingeblasen werden.
Denkbar ist in diesem Zusammenhang auch, dass die hier beschriebene Gebläsekühlung mit einer der hier beschriebenen Ausführungsform der Bodenkühlvorrichtung, insbesondere mit dem hier beschriebenen Außenflächenkühler, kombiniert werden kann, sodass sich die jeweiligen positiven Effekte und Vorteile der einzelnen Kühlvorrichtungen zusammen ergänzen und einen Synergieeffekt bilden können.
Gemäß zumindest einer Ausführungsform umfasst die Bodenkühlvorrichtung zumindest einen Flüssigkeitsvordosierer, welcher in die ausgeblasenen Behältnisse während des Zeitintervalls beginnt, zumindest ein Kühlmedium vorgebbar, in einem Behältnisinnenraum der Behältnisse einzudosieren. "Eindosieren" heißt in diesem Zusammenhang, dass der Flüssigkeitsvordosierer eine vorgebbare Menge des Kühlmediums, beispielsweise in Form eines Sprühnebels und/oder gespritzt, in den Behältnisinnenraum einfüllt. Über einen derartigen Flüssigkeitsvordosierer ist daher gewährleistet, dass insbesondere im Bereich der Behältnisböden der Behältnisse das einzelne Behältnis ausgehend von einer Behältnisinnenfläche von innen nach außen hin gekühlt werden kann. Denkbar ist, dass die hier beschriebene Bodenkühlvorrichtung umfassend den hier beschriebenen Flüssigkeitsvordosierer zusätzlich mit zumindest einer der obig beschriebenen Ausführungsformen der Bodenkühlvorrichtung kombiniert wird, sodass denkbar ist, dass die hier beschriebene Bodenkühlvorrichtung sowohl den hier beschriebenen Außenflächenkühler als auch den hier beschriebenen Flüssigkeitsdosierer umfasst, sodass sich wiederum beide "Bodenkühlarten" in vorteilhafter Weise addieren können. Insofern ist gewährleistet, dass in besonders kurzen Durchlaufzeiten der Bodenbereich und insbesondere die Behältnisböden der Behältnisse sowohl von außen ausgehend von der Außenfläche als auch von innen ausgehend von der Innenfläche der Behältnisse gleichmäßig gekühlt werden können. Insofern kann ein Temperaturgradient und ein Temperatur Abfall in Wanddickenrichtung möglichst homogen und stetig sein. Insofern können Seitenwände und der Behältnisboden sowohl von innen als auch von außen besonders effizient gekühlt werden.

Es wird darüber hinaus eine Vorrichtung zur Bodennachkühlung von ausgeblasenen Behältnissen angegeben. Beispielsweise kann mittels der hier beschriebenen Vorrichtung zur Bodennachkühlung von ausgeblasenen Behältnissen ein Verfahren zur Bodennachkühlung von ausgeblasenen Behältnissen durchgeführt werden, wie es in Verbindung mit einem oder mehreren der oben genannten Ausführungsformen beschrieben ist.

Gemäß zumindest einer Ausführungsform ist mittels der Vorrichtung zur Bodennachkühlung von ausgeblasenen Behältnissen nach einer Übergabe der ausgeblasenen Behältnissen von einer Formblasmaschine zu einem Auslaufstern, der unmittelbar entlang einer Transportrichtung der Behältnisse auf die Blasformmaschine folgt, eine Bodenkühlung der Behältnisse mittels zumindest einer Bodenkühlvorrichtung durchführbar. Dabei ist die Bodenkühlung der Behältnisse unmittelbar während eines Zeitintervalls von wenigstens 0,1 Sekunden und höchstens 2 Sekunden nach einem Druckentlasten der Behältnisse durch die Formblasmaschine einsetzbar.

Insofern umfasst die hier beschriebene Vorrichtung zur Bodennachkühlung zumindest die hier beschriebene Bodenkühlvorrichtung, welche an oder im Bereich des Auslaufsterns zur Kühlung der ausgeblasenen Behältnisse bereits während des Transports im Auslaufstern vorgesehen und eingerichtet ist.

Dabei kann die hier beschriebene Vorrichtung zur Bodennachkühlung und insbesondere die hier beschriebene Bodenkühlvorrichtung die bereits im Zusammenhang mit dem Verfahren dargestellten Ausführungsformen und Vorteile aufweisen.

Im Folgenden wird das hier beschriebene Verfahren sowie die hier beschriebene Vorrichtung zur Bodennachkühlung von ausgeblasenen Behältnissen anhand eines Ausführungsbeispiels und die dazu gehörigen Figuren näher erläutert.

In dem Ausführungsbeispiel und den Figuren sind gleiche oder gleichwirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.
- Fig. 1: Schematische Draufansicht einer Ausführungsform eines Verfahrens und einer Vorrichtung zur Bodenkühlung von ausgeblasenen Behältnissen.
- Fig. 2: Schematische Seitenansicht einer Vorrichtung zur Bodenkühlung von ausgeblasenen Behältnissen gemäß Figur 1.

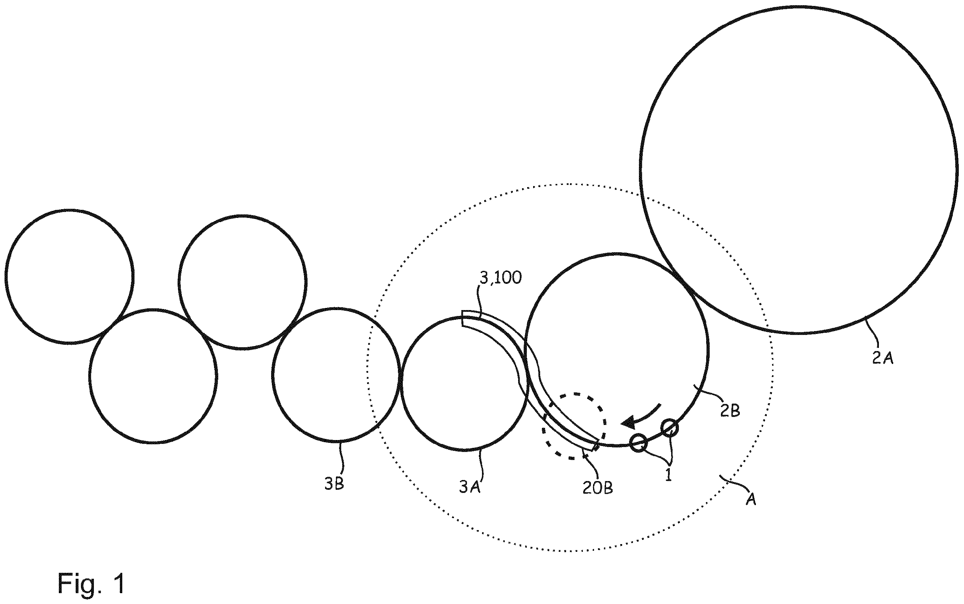

In der Figur 1 ist anhand einer schematischen Draufsicht ein Ausschnitt einer Behälterproduktionsanlage gezeigt. Dabei ist erkennbar, dass die Behälterproduktionsanlage eine Blasformmaschine 2A sowie ein unmittelbar in einer Transportrichtung (in Pfeilrichtung) von Behältnissen 1 auf die Blasformmaschine 2A folgenden Auslaufstern 2B umfasst. Zudem umfasst die hier beschriebene Behälterproduktionsanlage zumindest eine Bodenkühlvorrichtung 3, welche im Bereich (also beispielsweise bis unter den des Auslaufsterns 2B) des Auslaufsterns 2B angeordnet ist. Stromaufwärts der Blasformmaschine 2A ist eine (nicht dargestellte) Heizeinrichtung vorgesehen, die die Kunststoffvorformlinge z.B. mittels IR-Strahlung, NIR-Strahlung, Mikrowellenstrahlung, Lasern, etc. erwärmt. Die erwärmten Vorformlinge werden stromabwärts der Heizeinrichtung mittels eines Transportsterns auf die in der Blasformmaschine 2A benötigte Teilung gebracht und in die Blasformmaschine 2A gegeben. Innerhalb der Blasformmaschine 2A werden die Kunststoffvorformlinge durch wenigstens zwei, insbesondere drei Druckstufen innerhalb von Blasformen zu Kunststoffbehältnissen umgeformt. Im Anschluss an die Blasformmaschine 2A befindet sich ein Auslaufstern 2B, der die Kunststoffbehältnisse über weitere Transferelemente, insbesondere das erste Transportrad 3A und das zweite Transportrad 3B, an eine Nachfolgemaschine transportieren kann. Als Nachfolgemaschinen kommen insbesondere Etikettiervorrichtungen oder Füllvorrichtungen in Frage. Handelt es sich bei der Nachfolgemaschine um eine Etikettiervorrichtung ist denkbar, dass diese unmittelbar nach dem Transferelement 3B angeordnet ist. Insbesondere bei nachfolgenden Etikettiervorrichtungen (sog. Ergoblocs) ist es nämlich notwendig, dass die Behältnisse an deren Außenflächen möglichst kaum mit Flüssigkeiten benetzt sind, damit die aufgebrachten Etiketten die nötige Fixierung erhalten. Daher ist es in diesem Fall vorteilhaft, die Behältnisse nach der Blasformmaschine mittels Luft (sog. Vortec-Kühlung) zu kühlen. Wenn es sich bei der Nachfolgemaschine um eine Füllvorrichtung handelt, wäre es auch möglich, die Kühlung der Behältnisse mittels Wasser vorzunehmen.

Insbesondere ist aus der Figur 1 erkennbar, dass die Bodenkühlvorrichtung 3 kurz vor einer Übergabe auf ein Transportrad 3A im Bereich 20B des Auslaufsterns 2B angeordnet ist und beginnt die bereits ausgeblasenen Behältnisse 1, insbesondere in einem Bereich eines Behältnisbodens 11 der Behältnisse 1, zu kühlen. Dabei ist erfindungswesentlich, dass die Bodenkühlung der Behältnisse 11 mittels der Bodenkühlvorrichtung 3 während eines Zeitintervalls von wenigstens 0,1 Sekunden und höchstens 2 Sekunden nach einem Druckentlasten der Behältnisse durch die Formblasmaschine 2A nach dem Ausblasen bzw. Entlasten einsetzt. Dieses stellt sicher, dass im Bodenbereich 11 der jeweiligen Behältnisse 1 sich nach dem unmittelbaren Entlasten und Ausblasen keine unerwünschten Materialverformungen, beispielsweise verursacht durch einen inhomogenen Abkühlverlauf im Bodenbereich, ergeben. Mit anderen Worten wird dem Bodenbereich der Behältnisse 1 "keine Zeit gegeben", sich in unerwünschter Weise zu verformen und stattdessen wird bereits durch ein derart kurzes Zeitintervall möglichst schnell nach dem Druckentlasten mit der Bodenkühlung durch die Bodenkühlvorrichtung 3 begonnen, die jedoch - und dieses sei explizit erwähnt - vorgebbar auch über das Zeitintervall hinaus andauern kann und sich, wie insbesondere aus der Figur 1 erkennbar ist, auch noch bis zum ersten Transportrad 3A erstreckt. Denkbar ist auch dass sich die Bodenkühlvorrichtung 3 bis in den Bereich eines zweiten Transportrads 3B erstreckt.

Zudem ist zu erwähnen, die hier beschriebene Bodenkühlvorrichtung 3 eine"Vortec"-Kühlung umfasst.

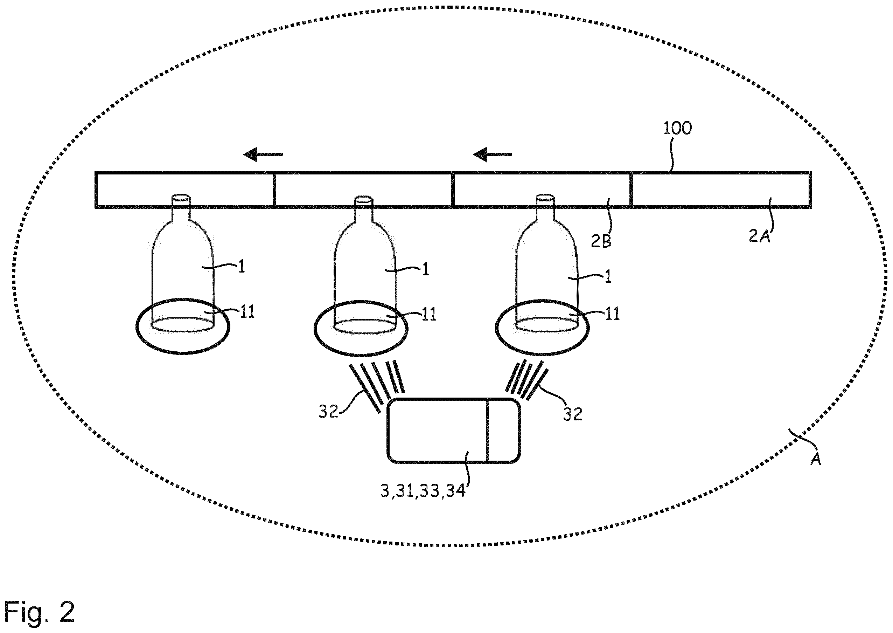

Insbesondere kann die hier beschriebene Bodenkühlvorrichtung 3 einen Außenflächenkühler 33, eine Gebläsekühlung 31 sowie einen hier beschriebenen Flüssigkeitsvordosierer 34 oder auch ein hier beschriebenes Sprinklerelement, wie eingangs erwähnt, umfassen (siehe auch Figur 2). Dabei kann die Bodenkühlvorrichtung 3 auch eine vorgebbare Kombination der hier beschriebenen speziellen Ausführungsform der Bodenkühlvorrichtung 3 umfassen, sodass es über die Bodenkühlvorrichtung 3 ermöglicht ist, "bausatzartig" einzelne Kühlelemente, das heißt beispielsweise den Außenflächenkühler zusammen mit dem hier beschriebenen Flüssigkeitsvordosierer kombinieren zu können. Mit anderen Worten ist durch die hier beschriebene Vorrichtung zur Bodennachkühlung 100 sowie durch das hier beschriebene Verfahren zur Bodennachkühlung von ausgeblasenen Behältnissen 1, wie es in der Figur 1 beschrieben ist, in besonders einfacher Art und Weise eine Bodennachkühlung angeboten, bei der durch das konkret beanspruchte Zeitintervall nach einem Druckentlasten der Behältnisse durch die Blasformmaschine in überraschender Art und Weise unerwünschte Materialverformungen, insbesondere im Bodenbereich 11 der Behältnisse 1, vermieden werden können, und gleichzeitig hohe Durchlaufraten stets gewährleistet sind.

In der Figur 2 ist anhand einer schematischen Seitenansicht die in der Figur 1 gezeigt Bodenkühlvorrichtung 3 (rein schematisch) in einem Ausschnitt A gezeigt. Erkennbar ist, dass die Bodenkühlvorrichtung 3 (insbesondere unmittelbar) unter dem Auslaufstern 2B angeordnet ist und in ihrer Ausrichtung auf die jeweiligen Bodenbereiche 11 der Behältnisse 1 gerichtet ist. Mit anderen Worten kann ein Kühlmedium 32 unmittelbar innerhalb des beanspruchten Zeitintervalls auf eine Außenfläche der jeweilige Behältnisse 1 treffen, um diese besonders effektiv zu kühlen.

Die Erfindung ist nicht durch die Beschreibung anhand der Ausführungsbeispiele beschränkt. Vielmehr umfasst die Erfindung jedes neue Merkmal sowie die Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder in den Ausführungsbeispielen angegeben ist.

### Bezugszeichenliste

- 1: Behältnisse
- 2A: Blasformmaschine
- 2B: Auslaufstern
- 3: Bodenkühlvorrichtung
- 3A: erstes Transportrad
- 3B: zweites Transportrad
- 11: Behältnisboden
- 20B: Bereich
- 31: Gebläsekühlung
- 32: Kühlmedium
- 33: Außenflächenkühler
- 34: Flüssigkeitsvordosierer
- 100: Vorrichtung zur Bodennachkühlung

## Patentansprüche

1. Verfahren zur Bodennachkühlung (100) von ausgeblasenen Behältnissen (1), wobei nach einer Übergabe der geblasenen Behältnisse (1) von einer Formblasmaschine (2A) zu einem Auslaufstern (2B), der unmittelbar entlang einer Transportrichtung der Behältnisse (1) auf die Formblasmaschine (2A) folgt, eine Bodenkühlung der Behältnisse (1) mittels zumindest einer Bodenkühlvorrichtung (3) erfolgt,
**dadurch gekennzeichnet, dass**
die Bodenkühlung der Behältnisse (1) unmittelbar während eines Zeitintervalls von wenigstens 0,1 Sekunden und höchstens zwei Sekunden nach einem Druckentlasten der Behältnisse (1) durch die Formblasmaschine (2A) einsetzt, wobei bereits bei der Übergabe von der Formblasmaschine (2A) in den unmittelbar in der Transportrichtung auf die Formblasmaschine (2A) folgenden Auslaufstern das Zeitintervall anläuft, wobei der Bodenbereich der jeweiligen ausgeblasenen Behältnisse mittels einer in Transportrichtung der ausgeblasenen Behältnisse auf die hier beschriebene Bodenkühlvorrichtung (3) folgenden weiteren Bodenkühlvorrichtung gekühlt wird, und wobei die Bodenkühlvorrichtung (3) zumindest einen Außenflächenkühler (33) umfasst, welcher ein Kühlmedium (32) auf eine Außenfläche von Behältnisböden (11) der ausgeblasenen Behältnisse (1) aufbringt und die Bodenkühlvorrichtung (3) mittels Luft als Kühlmedium die Behältnisböden (11) der Behältnisse (1) kühlt, wobei die Bodenkühlvorrichtung (3) zumindest eine Gebläsekühlung (31), also eine Kühlung ohne ein flüssiges Kühlmedium, umfasst, wobei mittels der Gebläsekühlung (31) die Luft, insbesondere Umgebungsluft, auf Behältnisböden (11) der Behältnisse (1) geführt wird.

2. Verfahren zur Bodennachkühlung (100) nach Anspruch 1,
**dadurch gekennzeichnet, dass**
der Außenflächenkühler (33) zumindest ein Sprühnebelelement umfasst, welches das Kühlmedium auf die Außenfläche der Behältnisböden (11) aufsprüht.

3. Verfahren zur Bodennachkühlung (100) nach zumindest einem der Ansprüche 1 bis 2, **dadurch gekennzeichnet, dass**
der Außenflächenkühler (33) zumindest ein Sprinklerelement umfasst, welches das Kühlmedium auf die Außenfläche der Behältnisböden (11) aufsprenkelt.

4. Verfahren zur Bodennachkühlung (100) nach zumindest einem der Ansprüche 1 bis 3,
**dadurch gekennzeichnet, dass**
der Außenflächenkühler (33) zumindest ein Schwammelement umfasst, welches zumindest teilweise mit dem Kühlmedium getränkt ist, und dessen Schwammaußenfläche mit der Außenfläche des Behältnisbodens (11) in Kontakt bringbar ist.

5. Verfahren zur Bodennachkühlung (100) nach dem vorhergehenden Anspruch,
**dadurch gekennzeichnet, dass**
das Schwammelement in Form einer Schwammrolle ausgebildet ist.

6. Verfahren zur Bodennachkühlung (100) nach zumindest einem der vorhergehenden Ansprüche,
**dadurch gekennzeichnet, dass**
die Bodenkühlvorrichtung (3) zumindest einen Flüssigkeitsvordosierer (34) umfasst, welcher in die ausgeblasenen Behältnisse (1) während des Zeitintervalls beginnt, zumindest ein Kühlmedium vorgebbar in einen Behältnisinnenraum der Behältnisse (1) einzudosieren.

7. Vorrichtungssystem umfassend eine Vorrichtung zur Bodennachkühlung (100) von ausgeblasenen Behältnissen (1), eine Formblasmaschine (2A) und einen Auslaufstern (2B), wobei
nach einer Übergabe der ausgeblasenen Behältnisse (1) von der Formblasmaschine (2A) zu dem Auslaufstern (2B), der unmittelbar entlang einer Transportrichtung der Behältnisse (1) auf die Formblasmaschine (2A) folgt, eine Bodenkühlung der Behältnisse (1) mittels zumindest einer Bodenkühlvorrichtung (3) durchführbar ist, **dadurch gekennzeichnet, dass**
die Bodenkühlung der Behältnisse (1) unmittelbar während eines Zeitintervalls von wenigstens 0,1 Sekunden und höchstens zwei Sekunden nach einem Druckentlasten der Behältnisse (1) durch die Formblasmaschine (2A) einsetzbar ist, wobei bereits bei der Übergabe von der Formblasmaschine (2A) in den unmittelbar in der Transportrichtung auf die Formblasmaschine (2A) folgenden Auslaufstern das Zeitintervall anläuft, wobei die Vorrichtung eine weitere Bodenkühlvorrichtung aufweist, welche in Transportrichtung der ausgeblasenen Behältnisse auf die hier beschriebene Bodenkühlvorrichtung (3) folgt, und wobei die Bodenkühlvorrichtung (3) zumindest einen Außenflächenkühler (33) umfasst, welcher ein Kühlmedium (32) auf eine Außenfläche von Behältnisböden (11) der ausgeblasenen Behältnisse (1) aufbringt und die Bodenkühlvorrichtung (3) mittels Luft als Kühlmedium die Behältnisböden (11) der Behältnisse (1) kühlt, wobei die Bodenkühlvorrichtung (3) zumindest eine Gebläsekühlung (31), also eine Kühlung ohne ein flüssiges Kühlmedium, umfasst, wobei mittels der Gebläsekühlung (31) die Luft, insbesondere Umgebungsluft, auf Behältnisböden (11) der Behältnisse (1) geführt wird.

## Claims

1. A method of after-cooling (100) of the bases of blown out containers (1), wherein after the transfer of the blow moulded containers (1) from a blow moulding machine (2A) to a run-out star wheel (2B) which directly follows the blow moulding machine (2A) along a conveying direction of the containers (1) a cooling of the bases of the containers (1) is carried out by means of at least one apparatus (3) for cooling the bases,
**characterized in that**
the cooling of the bases of the containers (1) starts immediately during a time interval of at least 0.1 seconds and at most 2 seconds after a pressure release of the containers (1) by the blow moulding machine (2A), wherein the time interval starts immediately at the time of the handover from the blow moulding machine (2A) to the run-out star wheel following in the direction of transport to the blow moulding machine (2A), wherein the bottom region of the respective blown out containers is being cooled by means of a further base cooling apparatus following in the transport direction of the blown out containers to the base cooling apparatus (3) described here and wherein the apparatus (3) for cooling the bases comprises at least one external face cooler (33) which applies a cooling medium (32) to an external face of bases (11) of the blown out containers (1) and the apparatus (3) for cooling the bases cools the bases (11) of the containers (1) by means of air as the cooling medium, wherein the apparatus (3) for cooling the base comprises at least one fan cooling means (31), therefore a cooling without a liquid cooling medium, wherein air, in particular air from the environment, is conveyed to the bases (11) of the containers (1) by means of the fan cooling means (31).

2. A method of after-cooling (100) of bases according to claim 1,
**characterized in that**
the external face cooler (33) comprises at least one atomizing spray element which sprays the cooling medium onto the external face of the bases (11) of the containers.

3. A method of after-cooling (100) of bases according to at least one of claims 1 to 2,
**characterized in that**
the external face cooler (33) comprises at least one sprinkler element which sprinkles the cooling medium onto the external face of the bases (11) of the containers.

4. A method of after-cooling (100) of bases according to at least one of claims 1 to 3,
**characterized in that**
the external face cooler (33) comprises at least one sponge element which is saturated at least in part with the cooling medium and the external face of which is capable of being brought into contact with the external face of the base (11) of the container.

5. A method of after-cooling (100) of bases according to the preceding claim,
**characterized in that**
the sponge element is designed in the form of a sponge roller.

6. A method of after-cooling (100) of bases according to at least one of the preceding claims,
**characterized in that**
the apparatus (3) for cooling the bases comprises at least one liquid pre-metering means (34) which during the time interval starts to meter in at least one cooling medium into the blown out containers (1) in a manner capable of being pre-set into an interior of the containers (1).

7. An apparatus for the after-cooling (100) of the bases of blown out containers (1), a blow moulding machine (2A) and a run-out star wheel (2B), wherein after the transfer of the blown out containers (1) from a blow moulding machine (2A) to a run-out star wheel (2B) which follows immediately along a conveying direction of the containers (1) to the blow moulding machine (2A), a cooling of the bases of the containers (1) is capable of being carried out by means of at least one apparatus (3) for cooling the bases,
**characterized in that**
the cooling of the bases of the containers (1) is capable of being started immediately during a time interval of at least 0.1 seconds and at most 2 seconds after a pressure release of the containers (1) by the blow moulding machine (2A), wherein the time interval starts immediately at the time of the handover from the blow moulding machine (2A) to the run-out star wheel following in the direction of transport to the blow moulding machine (2A), wherein the apparatus comprises a further apparatus for cooling the base, which follows the apparatus (3) for cooling the base described here in the transport direction of the blown out containers, and wherein the apparatus (3) for cooling the bases comprises at least one external face cooler (33) which applies a cooling medium (32) to an external face of bases (11) of the blown out containers (1) and the apparatus (3) for cooling the bases cools the bases (11) of the containers (1) by means of air as the cooling medium, wherein the apparatus (3) for cooling the base comprises at least one fan cooling means (31), therefore a cooling without a liquid cooling medium, wherein air, in particular air from the environment, is conveyed to the bases (11) of the containers (1) by means of the fan cooling means (31).

## Revendications

1. Procédé de refroidissement ultérieur de fonds (100) de récipients (1) soufflés, dans lequel un refroidissement des fonds des récipients (1) est réalisé au moyen d'au moins un dispositif de refroidissement de fond (3) une fois les récipients (1) soufflés transférés d'une machine de moulage par soufflage (2A) à une étoile de sortie (2B) suivant immédiatement la machine de moulage par soufflage (2A) le long d'une direction de transport des récipients (1),
**caractérisé en ce que**
le refroidissement des fonds des récipients (1) intervient immédiatement pendant un intervalle de temps d'au moins 0,1 seconde et d'au plus deux secondes après une décompression des récipients (1) à travers la machine de moulage par soufflage (2A), dans lequel l'intervalle de temps démarre déjà lors du transfert de la machine de moulage par soufflage (2A) dans l'étoile de sortie suivant immédiatement la machine de moulage par soufflage (2A) dans la direction de transport, dans lequel la zone de fond de chaque récipient soufflé est refroidie au moyen d'un autre dispositif de refroidissement de fond faisant suite au dispositif de refroidissement de fonds (3) décrit ici dans la direction de transport des récipients soufflés, et dans lequel le dispositif de refroidissement de fond (3) comporte au moins un refroidisseur de surface extérieure (33), lequel applique un milieu de refroidissement (32) sur une surface extérieure de fonds de récipients (11) des récipients (1) soufflés, et le dispositif de refroidissement de fonds (3) refroidit les fonds de récipients (11) des récipients (1) en utilisant l'air comme milieu de refroidissement, dans lequel le dispositif de refroidissement de fonds (3) comporte au moins un refroidissement au ventilateur (31), par conséquent un refroidissement sans milieu de refroidissement liquide, dans lequel l'air, en particulier l'air ambiant, est guidé sur les fonds de récipients (11) des récipients (1) au moyen du refroidissement au ventilateur (31).

2. Procédé de refroidissement ultérieur de fonds (100) selon la revendication 1,
**caractérisé en ce que**
le refroidisseur de surface extérieure (33) comporte au moins un élément de brouillard de pulvérisation, lequel pulvérise un milieu de refroidissement sur la surface extérieure des fonds de récipients (11).

3. Procédé de refroidissement ultérieur de fonds (100) selon au moins l'une des revendications 1 à 2,
**caractérisé en ce que**
le refroidisseur de surface extérieure (33) comporte au moins un élément arroseur, lequel arrose la surface extérieure des fonds de récipients (11) du milieu de refroidissement.

4. Procédé de refroidissement ultérieur de fonds (100) selon au moins l'une des revendications 1 à 3,
**caractérisé en ce que**
le refroidisseur de surface extérieure (33) comporte au moins un élément éponge, lequel est imprégné au moins en partie du milieu de refroidissement, et dont la surface extérieure peut être amenée en contact avec la surface extérieure du fond de récipient (11).

5. Procédé de refroidissement ultérieur de fonds (100) selon l'une quelconque des revendications précédentes,
**caractérisé en ce que**
l'élément éponge est réalisé sous la forme d'un rouleau en éponge.

6. Procédé de refroidissement ultérieur de fonds (100) selon au moins l'une des revendications précédentes,
**caractérisé en ce que**
le dispositif de refroidissement de fonds (3) comporte au moins un prédoseur de liquide (34), lequel, pendant l'intervalle de temps, commence à introduire de manière dosée et prédéfinie dans les récipients (1) soufflés au moins un milieu de refroidissement dans un espace intérieur de récipient des récipients (1).

7. Système de dispositif comprenant un dispositif de refroidissement ultérieur de fonds (100) des récipients (1) soufflés, une machine de moulage par soufflage (2A) et une étoile de sortie (2B), dans lequel un refroidissement des fonds des récipients (1) peut être réalisé au moyen d'au moins un dispositif de refroidissement de fonds (3) une fois les récipients (1) soufflés transférés de la machine de moulage par soufflage (2A) à l'étoile de sortie (2B) suivant immédiatement la machine de moulage par soufflage (2A) le long d'une direction de transport des récipients (1),
**caractérisé en ce que**
le refroidissement des fonds des récipients (1) peut intervenir immédiatement pendant un intervalle de temps d'au moins 0,1 seconde et d'au plus deux secondes après une décompression des récipients (1) à travers la machine de moulage par soufflage (2A), dans lequel l'intervalle de temps démarre déjà lors du transfert de la machine de moulage par soufflage (2A) dans l'étoile de sortie suivant immédiatement la machine de moulage par soufflage (2A) dans la direction de transport, dans lequel le dispositif comprend un autre dispositif de refroidissement de fond, lequel fait suite au dispositif de refroidissement de fonds (3) décrit ici dans la direction de transport des récipients soufflés, et dans lequel le dispositif de refroidissement de fonds (3) comporte au moins un refroidisseur de surface extérieure (33), lequel applique un milieu de refroidissement (32) sur une surface extérieure de fonds de récipients (11) des récipients (1) soufflés, et le dispositif de refroidissement de fonds (3) refroidit les fonds de récipients (11) des récipients (1) en utilisant l'air comme milieu de refroidissement, dans lequel le dispositif de refroidissement de fonds (3) comporte au moins un refroidissement au ventilateur (31), par conséquent un refroidissement sans milieu de refroidissement liquide, dans lequel l'air, en particulier l'air ambiant, est guidé sur les fonds de récipients (11) des récipients (1) au moyen du refroidissement au ventilateur (31).
